# EUROPEAN PATENT SPECIFICATION

(11) **EP 2 376 282 B1**
(45) Date of publication and mention of the grant of the patent: **24.04.2019**
(21) Application number: 09774673.9
(22) Date of filing: 11.12.2009
(51) Int. Cl.: B32B 7/12, B32B 9/02, B32B 27/08, B32B 27/10, B32B 27/18, B32B 27/36, B65D 65/46

(54) **SHEET FOR PACKAGING FOOD**
BOGEN ZUR VERPACKUNG VON LEBENSMITTELN
FEUILLE D'EMBALLAGE D'ALIMENT

(30) Priority: 15.12.2008 IT PD20080368
(43) Date of publication of application: 19.10.2011
(73) Proprietor: ESSEOQUATTRO S.P.A., 35010 Carmignano di Brenta (Padova) (IT)
(72) Inventor: ORTOLANI, Silvia, I-36100 Vicenza (IT); ORTOLANI, Roberta, I-35142 Padova (IT)
(74) Representative: Cantaluppi, Stefano
(86) International application number: PCT/EP2009/066996
(87) International publication number: WO 2010/069888

(56) References cited:
- EP-A1- 1 369 227
- EP-A1- 1 584 464
- WO-A1-94/17220
- GB-A- 2 443 810
- US-A1- 2008 160 327

## Description

### Technical Field

The present invention relates to a sheet for packaging food.

### Background Art

Various types of sheet for packaging food which is sold loose by weight, such as salami, cheese, meat, bakery products and the like, are currently known.

Sheets of the type that comprises a first outer layer of paper coupled to a second inner layer made of polyethylene are widespread. Characteristic, distinctive and ornamental markings are generally printed on the outer paper layer, while the polyethylene layer makes contact with the food for its best preservation.

Although these known types of sheet are used extensively, they have drawbacks. For example, these sheets are unable to act as a barrier against light and the infrared, with important limitations for preservation of food whose decomposition is facilitated by light.

Other known sheets have a layer of paper on which a layer of aluminum, adapted to reflect light and the infrared, is deposited by means of a metallization operation.

However, these other sheets can be placed in contact with the food only by means of their non-metallized face, due to the concrete risk of migration of the metal toward the food.

In order to obviate these drawbacks, this same Applicant devised a sheet for packaging food, as described and claimed in EP 1584464; such sheet for packaging food is of the type that comprises a first paper layer coupled to a second polyethylene layer and is characterized in that a third metallic layer is deposited on said second polyethylene layer; such second layer is coupled to the first layer on the side of the third metallic layer by interposition of a fourth adhesive layer between the third and first layers, such fourth adhesive layer being based on vegetable starches and glucose. The adhesive layer is such as to allow easy manual separation of the first paper layer on one side and of the second polyethylene layer with metallic layer on the other side, for better disposal of the waste. Numerous studies and tests conducted on this sheet for packaging food have shown that if it is not sent to disposal after being separated into its components, i.e., the first paper layer on one side and the third polyethylene layer with metallic layer on the other side, but is sent intact to composting or to methods for the production of biomass for various uses (for example as an energy source), it is presumable that such sheet will degrade over relatively long times with respect to the expected times and with the risk of unwanted contaminations of the ground or air in the medium and long term.

### Disclosure of the invention

The aim of the present invention is to provide a sheet for packaging food that is capable of obviating the limitations of known types of sheet.

Within this aim, an object of the present invention is to provide a sheet for packaging food that is biodegradable and compostable and whose degradation occurs in much shorter times than current sheets of the known type.

Another object of the invention is to provide a sheet for packaging food that is capable of degrading without releasing pollutants and contaminants in the medium and long term.

Another object of the invention is to provide a sheet which, in addition to being impermeable, ensures protection against the light and infrared rays to the packaged food, but also provides assurance of lack of migration of the aluminum from said sheet.

Another object of the present invention is to provide a sheet for packaging food that is capable of ensuring better preservation over time of the organoleptic characteristics and of the freshness and appearance of the packaged food.

Another object of the present invention is to provide a sheet for packaging food that can be produced economically with known systems and technologies.

This aim and these and other objects, which will become better apparent hereinafter, are achieved by a sheet (10) for packaging food, comprising
- - a first layer (11) made of paper-like material, selected from food-grade or recycled pure cellulose paper, with a grammage comprised between 15 g/m² and 88 g/m²; Kraft and/or recycled Kraft type;
- a second intermediate layer (12) made of metallic material;
- a third layer (13) made of plastic material, on which said second layer (12) is deposited;
- an adhesive layer (14) between the first and second layers,
characterized in that said third layer (13) is constituted by a film of biodegradable and compostable in less than one hundred and eighty days plastic material, as per European standard EN 13432 part 2, adapted for contact with food that comprises
- a polymer based on a biodegradable and compostable copolyester of petrochemical origin,
- a polymer based on lactic acid of vegetable origin; and
said adhesive layer (14) is based on vegetable starches and glucose such as to allow easy manual separation of the first layer (11) from the second layer (12) and the third layer (13).

### Brief description of the drawings

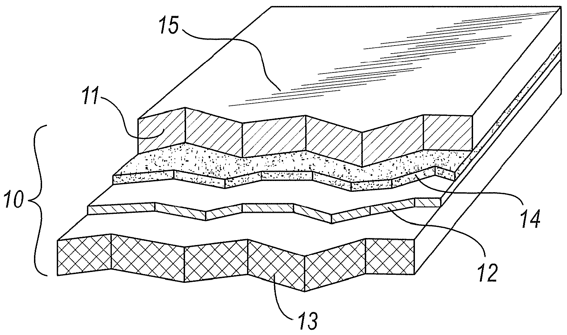

Further characteristics and advantages of the invention will become better apparent from the following detailed description of a preferred but not exclusive embodiment of the sheet for packaging food according to the invention, illustrated by way of non-limiting example in the accompanying drawing, wherein the sole Figure is a sectional side view of a sheet for packaging food according to the invention.

### Ways of carrying out the Invention

With reference to the figure, a sheet for packaging food according to the invention is generally designated by the reference numeral 10. The sheet 10 comprises
- a first layer 11 made of paper-like material, to be directed outward;
- a second intermediate layer 12 made of metallic material, as a barrier against light and the infrared;
- a third layer 13 made of plastic material, on which the second layer 12 is deposited,
- an adhesive layer 14 between the first layer 11 and the second layer 12.

The particularity of the sheet 10 according to the invention resides in that the third layer 13 is constituted by a film of biodegradable and compostable plastic material adapted for contact with food.

In particular, such film of biodegradable and compostable material is provided by means of a mixture (blend) that comprises
- a polymer based on a biodegradable and compostable copolyester of petrochemical origin, such as for example ECOFLEX® F B X 7011 of the BASF company,
- a polymer based on polylactic acid of vegetable origin, for example of the type provided by the BASF company.

Such film of biodegradable and compostable plastic material is constituted by a mixture (blend) which is constituted for example by the ECOVIO®/LBX 8145 product of the BASF company.

Such a mixture allows to comply with the DIN38412 part 30 standard related to the non-toxicity of the wastewater produced by composting the biodegradable film.

The third layer 13 thus provided is biodegradable and compostable in less than one hundred and eighty days, as per European standard ENI 3432 part 2.

The third layer 13, constituted by a film of biodegradable and compostable plastic material, preferably has a density of 1.25 ± 0.1 g/cm³.

The third layer 13 preferably has a minimum thickness of 8 µm (microns), with a grammage of 10 g/m².

The third layer 13 preferably has a maximum thickness of 18 µm (microns), with a grammage of 22.5 g/m².

It is to be understood that the third layer 13 can also be provided by means of films composed of other mixtures of biodegradable polymers which are compostable and suitable for contact with food, for example with mixtures which comprise mostly polymers of vegetable origin, and therefore, weight for weight, adapted to generate a lower CO₂ emission with respect to a polyethylene film, as in known types of sheet.

The third layer 13 can be provided by a mixture that also comprises other additives designed to modify the color and technical characteristics, maintaining in any case its biodegradability, compostability and suitability for contact with food.

The first layer 11 made of paper-like material is preferably made of food-grade or recycled pure cellulose paper, with a grammage comprised between 15 g/m² and 88 g/m².

As an alternative, the first layer 11 made of paper-like material is provided by means of paper of the so-called Kraft and/or recycled Kraft type, i.e., a paper obtained by means of a soda-based process also known as Kraft process, to extract chemically cellulose from wood. Characteristic, distinctive or ornamental markings, according to the needs and requirements of the retailer, can be printed on the outer face 15 of the first layer 11.

The second intermediate layer 12 made of metallic material is constituted by a thin layer of metallic vapors, which is deposited so as to adhere to the third layer 13.

Such metallic vapors are preferably aluminum vapors.

Such metallization of the third layer 13 reduces its permeability to gases and to water vapor.

The adhesive layer 14 is such as to allow easy manual separation of the first layer 11 from the second layer 12 and the third layer 13.

Such adhesive layer is preferably based on non-toxic, biodegradable and compostable material, for example based on vegetable starches and glucose.

The total weight of the sheet 10 according to the invention is comprised between 25 g/m² and 95 g/m². In practice it has been found that the invention achieves the intended aim and objects.

The invention has in fact provided a sheet for packaging food which is biodegradable and compostable and whose degradation occurs in much shorter times than similar sheets of the known type, thanks to the film that constitutes the third layer 13, which is made of a mixture of particularly biodegradable and compostable materials.

Further, the invention provides a sheet for packaging food that can degrade without releasing pollutants and contaminants in the medium and long term.

Moreover, the invention provides a sheet which in addition to being impermeable ensures that the packaged foods are protected against the light and infrared rays and also provides assurance of no migration of aluminum from the sheet itself. Moreover, the present invention provides a sheet for packaging food which is capable of ensuring a better preservation over time of the organoleptic characteristics and of the freshness and appearance of the packaged food.

Moreover, the present invention provides a sheet for packaging food that can be manufactured cheaply with known systems and technologies.

The invention thus conceived is susceptible of numerous modifications and variations, all of which are within the scope of the appended claims; all the details may further be replaced with other technically equivalent elements. In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A sheet (10) for packaging food, comprising
- a first layer (11) made of paper-like material, selected from food-grade or recycled pure cellulose paper, with a grammage comprised between 15 g/m² and 88 g/m²; Kraft and/or recycled Kraft type;
- a second intermediate layer (12) made of metallic material,
- a third layer (13) made of plastic material, on which said second layer (12) is deposited,
- an adhesive layer (14) between the first and second layers,
**characterized in that** said third layer (13) is constituted by a film of biodegradable and compostable in less than one hundred and eighty days plastic material, as per European standard EN13432 part 2, adapted for contact with food made of a mixture that comprises
- a polymer based on a biodegradable and compostable copolyester of petrochemical origin,
- a polymer based on lactic acid of vegetable origin; and
said adhesive layer (14) is based on vegetable starches and glucose such as to allow easy manual separation of the first layer (11) from the second layer (12) and the third layer (13).

2. The sheet (10) according to claim 1, **characterized in that** said third layer (13), constituted by said film of biodegradable and compostable plastic material has a density of 1.25 ± 0.1 g/cm³

3. The sheet (10) according to the preceding claims, **characterized in that** said third layer has a minimum thickness of 8 µm (microns), with a grammage of 10 g/m², and a maximum thickness of 18 µm (microns), with a grammage of 22.5 g/m².

4. The sheet (10) according to the preceding claims, **characterized in that** said third layer (13) is provided by a mixture that also comprises additives designed to modify the color and technical characteristics, maintaining its biodegradability, compostability and suitability for contact with food.

5. The sheet (10) according to the preceding claims, **characterized in that** said first layer (11) made of paper-like material is made of food-grade or recycled pure cellulose paper, with a grammage comprised between 15 g/m² and 88 g/m².

6. The sheet (10) according to claims 1 or 2, **characterized in that** said first layer (11) made of paper-like material is provided by means of paper of Kraft or recycled Kraft type.

7. The sheet (10) according to the preceding claims, **characterized in that** said second intermediate layer (12) made of metallic material is constituted by a thin layer of metallic vapors deposited on said third layer (13).

8. The sheet (10) according to claim 7, **characterized in that** said metallic vapors are aluminum vapors.

9. The sheet (10) according to the preceding claims, **characterized in that** it has a total weight comprised between 25 g/m² and 95 g/m².

## Patentansprüche

1. Folie (10) zum Verpacken von Lebensmitteln, umfassend:
- eine erste Schicht (11), die aus papierähnlichem Material, das aus Papier in Lebensmittelqualität oder in recycelter reiner Zellstoffqualität ausgewählt wird, mit einem Flächengewicht zwischen 15 g/m² und 88 g/m²; aus Kraftpapier und / oder recyceltem Kraftpapier hergestellt wird;
- eine zweite Zwischenschicht (12) aus metallischem Material,
- eine dritte Schicht (13) aus Kunststoff, auf der die zweite Schicht (12) angeordnet ist,
- eine Klebeschicht (14) zwischen den ersten und zweiten Schichten,
**dadurch gekennzeichnet, dass** die dritte Schicht (13) aus einem Film aus Kunststoffmaterial besteht, das in weniger als einhundertundachtzig Tagen biologisch abbaubar und kompostierbar ist, wie in der europäischen Norm EN13432 Teil 2 angegeben, angepasst für den Kontakt mit Lebensmitteln, die aus einer Mischung bestehen, die aufweist:
- ein Polymer auf der Basis eines biologisch abbaubaren und kompostierbaren Copolyesters von petrochemischen Ursprung,
- ein Polymer auf der Basis von Milchsäure von pflanzlichen Ursprung; und
wobei die Klebeschicht (14) auf pflanzlichen Stärken und Glukose basiert, um so eine einfache manuelle Trennung der ersten Schicht (11) von der zweiten Schicht (12) und der dritten Schicht (13) zu ermöglichen.

2. Folie (10) nach Anspruch 1, **dadurch gekennzeichnet, dass** die dritte Schicht (13), die aus der Folie aus biologisch abbaubarem und kompostierbarem Kunststoffmaterial besteht, eine Dichte von 1,25 ± 0,1 g/cm³ aufweist.

3. Folie (10) nach den vorhergehenden Ansprüchen, **dadurch gekennzeichnet, dass** die dritte Schicht eine minimale Dicke von 8 µm (Mikron) mit einem Flächengewicht von 10 g/m² und eine maximale Dicke von 18 µm (Mikron) mit einer Flächengewicht von 22,5 g/m² aufweist.

4. Folie (10) nach den vorhergehenden Ansprüchen, **dadurch gekennzeichnet, dass** die dritte Schicht (13) aus einer Mischung besteht, die auch Additive umfasst, die dazu bestimmt sind, um die Farbe und technischen Eigenschaften zu verändern, wobei ihre biologische Abbaubarkeit, Kompostierbarkeit und Kontaktfähigkeit mit den Lebensmitteln erhalten bleiben.

5. Folie (10) nach den vorhergehenden Ansprüchen, **dadurch gekennzeichnet, dass** die erste Schicht (11), die aus papierähnlichem Material hergestellt ist, aus Papier in Lebensmittelqualität oder in recycelter reiner Zellstoffqualität mit einem Flächengewicht zwischen 15 g/m² und 88 g/m² hergestellt wird.

6. Folie (10) nach Anspruch 1 oder 2, **dadurch gekennzeichnet, dass** die erste Schicht (11), die aus papierähnlichem Material hergestellt ist, durch Papier aus Kraftpapier und / oder recyceltem Kraftpapier vorgesehen wird.

7. Folie (10) nach den vorhergehenden Ansprüchen, **dadurch gekennzeichnet, dass** die zweite Zwischenschicht (12), die aus metallischem Material hergestellt ist, durch eine dünne Schicht aus metallischen Dämpfen gebildet wird, die auf der dritten Schicht (13) abgeschieden ist.

8. Folie (10) nach Anspruch 7, **dadurch gekennzeichnet, dass** die metallischen Dämpfe Aluminiumdämpfe sind.

9. Folie (10) nach den vorhergehenden Ansprüchen, **dadurch gekennzeichnet, dass** sie ein Gesamtgewicht zwischen 25 g/m² und 95 g/m² aufweist.

## Revendications

1. Feuille (10) pour emballer des aliments, comprenant
- une première couche (11) fabriquée en un matériau du type papier, sélectionné parmi un papier pure cellulose de qualité alimentaire ou recyclé, avec un grammage compris entre 15 g/m² et 88 g/m², un papier du type Kraft et/ou du type Kraft recyclé ;
- une deuxième couche intermédiaire (12) fabriquée en un matériau métallique,
- une troisième couche (13) fabriquée en un matériau plastique, sur laquelle ladite deuxième couche (12) est déposée,
- une couche adhésive (14) entre les première et deuxième couches,
**caractérisée en ce que** ladite troisième couche (13) est constituée d'un film en un matériau plastique biodégradable et compostable en moins de cent quatre-vingts jours, conformément à la norme européenne EN13432 partie 2, adapté pour entrer en contact avec des aliments, fabriqué en un mélange qui comprend
- un polymère à base d'un copolyester biodégradable et compostable d'origine pétrochimique,
- un polymère à base d'acide lactique d'origine végétale ; et
ladite couche adhésive (14) est à base d'amidons végétaux et de glucose de manière à permettre une séparation manuelle facile de la première couche (11) de la deuxième couche (12) et de la troisième couche (13).

2. Feuille (10) selon la revendication 1, **caractérisée en ce que** ladite troisième couche (13), constituée dudit film en un matériau plastique biodégradable et compostable a une densité de 1,25 ± 0,1 g/cm³.

3. Feuille (10) selon les revendications précédentes, **caractérisée en ce que** ladite troisième couche a une épaisseur minimale de 8 µm (microns), avec un grammage de 10 g/m², et une épaisseur maximale de 18 µm (microns), avec un grammage de 22,5 g/m².

4. Feuille (10) selon les revendications précédentes, **caractérisée en ce que** ladite troisième couche (13) est fournie par un mélange qui comprend également des additifs conçus pour modifier la couleur et les caractéristiques techniques, en conservant son caractère biodégradable, compostable et approprié pour un contact avec des aliments.

5. Feuille (10) selon les revendications précédentes, **caractérisée en ce que** ladite première couche (11) fabriquée en un matériau du type papier est fabriquée en un papier pure cellulose de qualité alimentaire ou recyclé avec un grammage compris entre 15 g/m² et 88 g/m².

6. Feuille (10) selon les revendications 1 ou 2, **caractérisée en ce que** ladite première couche (11) fabriquée en un matériau du type papier est fournie au moyen d'un papier du type Kraft ou du type Kraft recyclé.

7. Feuille (10) selon les revendications précédentes, **caractérisée en ce que** ladite deuxième couche intermédiaire (12) fabriquée en un matériau métallique est constituée d'une fine couche de vapeurs métalliques déposée sur ladite troisième couche (13).

8. Feuille (10) selon la revendication 7, **caractérisée en ce que** lesdites vapeurs métalliques sont des vapeurs d'aluminium.

9. Feuille (10) selon les revendications précédentes, **caractérisée en ce qu'**elle a un poids total compris entre 25 g/m² et 95 g/m².
